# EUROPEAN PATENT APPLICATION

(11) **EP 2 273 365 A1**
(43) Date of publication of application: **12.01.2011**
(21) Application number: 09305609.1
(22) Date of filing: 26.06.2009
(51) Int. Cl.: G06F 9/445

(54) **Combined memory and storage device in an apparatus for data processing**

(71) Applicant: Thomson Licensing, 92130 Issy-les-Moulineaux (FR)
(72) Inventor: Georgi, Marco, 30855, Langenhagen (DE); Theis, Oliver, 30655, Hannover (DE)
(74) Representative: Thies, Stephan

(57) **Abstract**

The invention concerns an apparatus (10) for data processing comprising a central processing unit (12) and a non volatile random access memory (34). The central processing unit (12) and the non volatile random access memory (34) are connected via a memory bus (14, 16, 20, 32). The data related to an operating system for running said apparatus (10) is at least partly stored in said non volatile random access memory (34) and the memory used by the operating system for operating said apparatus (10) is at least partly said non volatile memory (34).

## Description

### Technical Field of the Invention

The invention relates to an apparatus for data processing comprising a central processing unit and a non volatile random access memory.

### Background of the Invention

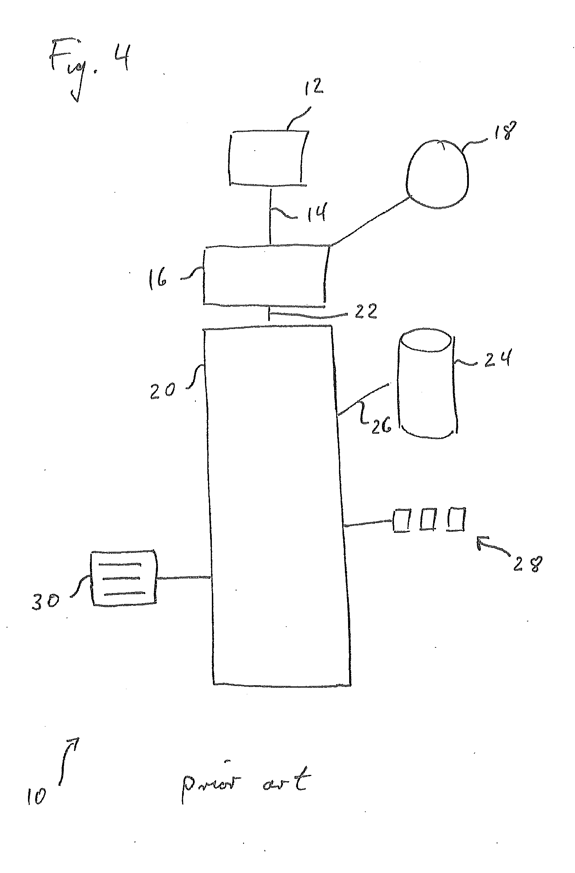

Referring to Fig. 4, a typical architecture of an apparatus 10 for data processing, especially a computer system, home entertainment device or the like is shown. A central processing unit 12, in the following referred to as a CPU, is connected via a front side bus 14 to a Northbridge 16. A random access memory 18, also referred to as a RAM, is connected to the Northbridge 16. The Northbridge 16 and a Southbridge 20 build a bus system of the apparatus 10 for data processing, shown in Fig. 4. The Northbridge 16 and the Southbridge 20 are connected e. g. via a direct media interface 22. A data storage device 24, e.g. a hard disk or the like, is connected to the Southbridge 20 via an S-ATA interface 26. Further, several USB-ports 28 and PCI-slots 30 are connected to the Southbridge 20.

Typically, a standard random access memory device (RAM), e.g. a synchronous dynamic random access memory (SDRAM) or a double data rate synchronous dynamic random access memory (DDR-SDRAM, DDRAM) device is used as the random access memory 18. These devices provide high-speed data transfer rates. However, these memories are volatile memories and have a rather limited storage capacity. In contrast, the data storage device 24, e.g. a conventional hard disc drive or a flash memory device, offers a low data transfer rate, but it is non-volatile and has a large storage capacity.

During a start-up sequence (booting) of an operating system running on a machine having a system architecture as shown in Fig. 4, data related to the operating system that is typically stored on the data storage device 24 has to be read from this device and has to be copied via Southbridge 20 and Northbridge 16 to the random access memory 18. Due to the limited data transfer rate of the data storage device 24 and the long path the data takes to the random access memory 18, booting of such an apparatus can take several minutes. The same problem arises in case such a system should be shut down: data presently under processing by the CPU 12 is stored in the random access memory 18 and has to be copied to the data storage device 24 in order not to be lost due to power down. A further problem is a sudden loss of power e.g. due to a blackout. All data stored in the volatile random access memory 18 is lost, the operating system stops in an indefinite status and a time-consuming power-fail restart procedure is necessary upon the next boot up of the respective system.

US 2003/0028708 A1 discloses a device, a method and a system for direct execution of code from a flash memory arrangement. The system comprises a flash based unit that communicates with a CPU and a RAM via a bus system. For execution of code the CPU reads it from the RAM, however the code is stored in the flash based unit. Said flash based unit differs from known units in that it features a volatile memory component in direct communication with a flash memory.

A further data storage device is known from US 2005/0050261 A1. The disclosed device comprises a controller, a FeRAM unit and a flash memory unit. An enhanced data transfer rate may be achieved by storing incoming data in the FeRAM that offers a high data transfer rate. Later on, the controller is shifting data to the flash memory unit that offers a much higher data capacity.

According to US 7,047,356 B2 a computer system's booting speed may be enhanced by providing a large RAM storage, however a separate power source for the RAM is needed.

### Summary of the Invention

An object of the invention is to provide an apparatus for data processing that is improved with respect to the deficiencies known from prior art.

The problem is solved by the subject matter of the independent claims. Advantageous embodiments of the invention are subject matter of the dependent claims.

An apparatus for data processing according to the invention comprises a central processing unit and a memory bus for attaching a non volatile random access memory. Data related to an operating system used for running said apparatus is at least partly stored in said non volatile random access memory. The memory used by the operating system for operating said apparatus is at least partly said non volatile random access memory.

The concept of the apparatus according to the invention is based on the following considerations:

Computer systems known from prior art comprise a plurality of different types of memories and storage devices. This is due to the fact every type of storage has its own very specific advantages and disadvantages, e.g. a hard disc provides a huge storage capacity but it offers limited data transfer rates and no random access characteristics. On the other hand, e.g. a DDR-SDRAM offers high data rates but its storage capacity is rather limited due to the high costs for the storage space. While the hard disc stores data permanently, a typical random access memory is volatile.

In order to emphasize the advantages of the respective types of memory, the typical architecture known from nowadays computers has been developed. However, this architecture has a significant drawback. Due to the necessity for interconnection and management of the different memories long data paths leading to a limited data throughput have been developed.

Recent improvements made with respect to availability and cost of storage space of nonvolatile random access memories offer the possibly for a completely new computer architecture that overcomes the aforementioned problems. The memory used for permanent mass storage of data, typically a hard disc for storage of e.g. user data, data relating to the operating system, application programs etc. and the random access memory used for data processing e.g. a DDR-SDRAM device can be designed as one single integrated memory. A nonvolatile random access memory may serve as a memory for permanent mass storage of data as well as a memory for data processing by the CPU.

Advantageously, the access time for data related, e.g. to a further application program typically stored on a hard disc drive in computers known from prior art, is significantly reduced. Instead of copying the respective data from a hard disc drive to a main random access memory of the computer - a time consuming process especially during start-up of the computer - the CPU may directly access the desired data in the nonvolatile random access memory. The result is a faster booting sequence and improved system performance.

Preferably, an apparatus is provided, wherein the only recordable memory comprised by said apparatus is said non volatile random access memory.

It is understood, a recordable memory is a memory used for frequent read-write processes, i.e. during standard operation of the computer. In computer systems known from prior art, a main random access memory e.g. a SDRAM and a mass storage device, e.g. a hard disc are such recordable memories. A rewritable CD or DVD as well as a memory stick or the like is not understood as such a recordable memory here.

Advantageously, a computer system according to the invention comprises only one type of recordable memory. As a consequence the computer's architecture is simplified.

Preferably, an apparatus is provided, wherein the non volatile random access memory is located in a component of the apparatus that is physically detachable from said apparatus.

User data as well as data related to application programs and the operating system is stored in the nonvolatile random access memory. By detaching said nonvolatile random access memory from a first computer system and attaching it to a second and further computer system, computer work started with the first computer system may be continued using the second computer system. The suggested computer architecture allows a very flexible change of computer systems, even no start-up sequence is necessary due to the fact the main memory in its present state is safeguarded by the non volatility of the random access memory. The different computer systems in question may comprise different peripherals, e.g. different I/O-hardware like display or input devices etc. In order to allow a smooth change between different computer systems, hardware profiles assigned to the respective systems may be stored in the nonvolatile random access memory.

Advantageously, the random access memory is the only recordable memory comprised by said apparatus and is located in a component of the apparatus that is physically detachable from said apparatus.

User data, especially personal or confidential data, can only be stored in the non volatile random access memory; simply due to the fact that no further memory is available in the computer system. By detaching the memory from the computer system, the user can take all personal data with him or her. Consequently, there is no risk of accidental distribution or loss of personal data in case an external computer system is temporarily used or the computer system is temporarily used by another user.

Preferably, an apparatus is provided, wherein the memory bus connection is realized by a direct wire or plug connection of pins between the central processing unit and the non volatile random access memory. Preferably, the memory bus is a PCI - Express connection.

High data rates between the memory and the CPU are necessary to achieve a good system performance. Consequently, a direct and fast connection between the CPU and the non volatile random access memory is preferable.

Advantageously, an apparatus is provided, wherein the non volatile random access memory is divided into different virtual sections. Preferably, at least one virtual section is used for data storage and a further virtual section is used as a primary memory for processing data. According to an improvement a size of the virtual sections is dynamically allocatable.

Advantageously, the non volatile random access memory is a phase change random access memory (PCRAM), a magnetic random access memory (MRAM), a ferroelectric random access memory (FRAM) or a NanotubeRAM device.

The mentioned types of non volatile random access memory devices are promising candidates for present and future application. They are or they will be commercially available and they fulfill the requirements for a reliable random access memory of the inventive apparatus.

According to a further embodiment of the invention an apparatus is provided, wherein said apparatus is one of a personal computer, a microprocessor, an embedded platform, a set-top box or a media recorder. Obviously, a computer architecture as previously described is advantageous for these electronic devices.

### Brief Description of the Figures

In the following the invention is described in more detail with reference to the attached figures and drawings. Similar or corresponding details in the figures are marked with the same reference numerals.
Fig. 1 and 2 each show a comparison between a schematic computer architecture known from prior art (Fig. 1a, 2a) in contrast to a schematic computer architecture according an embodiment of the invention (Fig. 1b, 1c, 1d, 2b).
Fig. 3 schematically shows an allocation of a nonvolatile memory and
Fig. 4 shows a computer architecture known from prior art.

### Detailed Description of the Invention

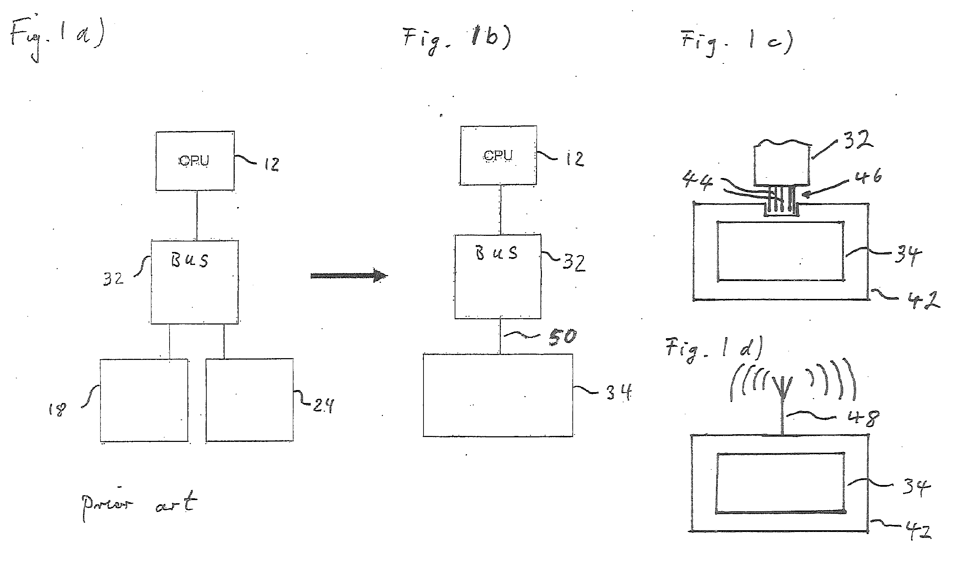

Fig. 1a shows a schematic sketch of a computer architecture known from prior art. A central processing unit (CPU) 12 is connected to a bus system 32. A bus system is understood as being a connection means to connect two or more devices having one or multiple connection pins, for example a CPU and a memory. The bus system connects the connection pins of the devices either in a parallel manner, in a serial manner or with multiple serial connections, which are arranged in a parallel manner. An SDRAM device as a random access memory 18 and a hard disc drive as a data storage device 24 are also connected to the bus system 32.

In contrast, as it is depicted in Fig. 1b, according to an embodiment of the invention, both the random access memory 18 and the data storage device 24 are substituted by a single nonvolatile random access memory 34, i.e. an PCRAM - device. As it is known from Fig. 1a, the CPU 12 in turn is connected to the bus system 32. Said CPU 12 and the nonvolatile random access memory 34 communicate via the bus system 32. The connection between the memory bus 32 and the non volatile random access memory 34 is a direct wire connection 50 or a connection realized by a plug 46 as shown in Fig. 1c. In Fig. 1c, the non volatile random access memory 34 is in a physically detachable component 42. The component 42 is connectable to the memory bus 32 via a plug connection 46 of pins 44. Alternatively, also a wireless connection between the memory bus 32 and the non volatile random access memory 34 as depicted in Fig. 1d is useable. For the wireless connection, the component 42 comprising the non volatile random access memory 34 has an antenna 48 and means for preparing the data to be transmitted via a wireless connection (not shown) attached to it. On the other hand, a wireless connection means (not shown) and an antenna (not shown) are connected to the memory bus 32. The data communication from the CPU 12 is performed over the memory bus 32 to the wireless connection means (not shown), and subsequently over the wireless path to the antenna 48 attached component 42 comprising the non volatile random access memory 34. Alternatively, the connection between the CPU 12 and the non volatile random access memory 34 is realized as an optical connection.

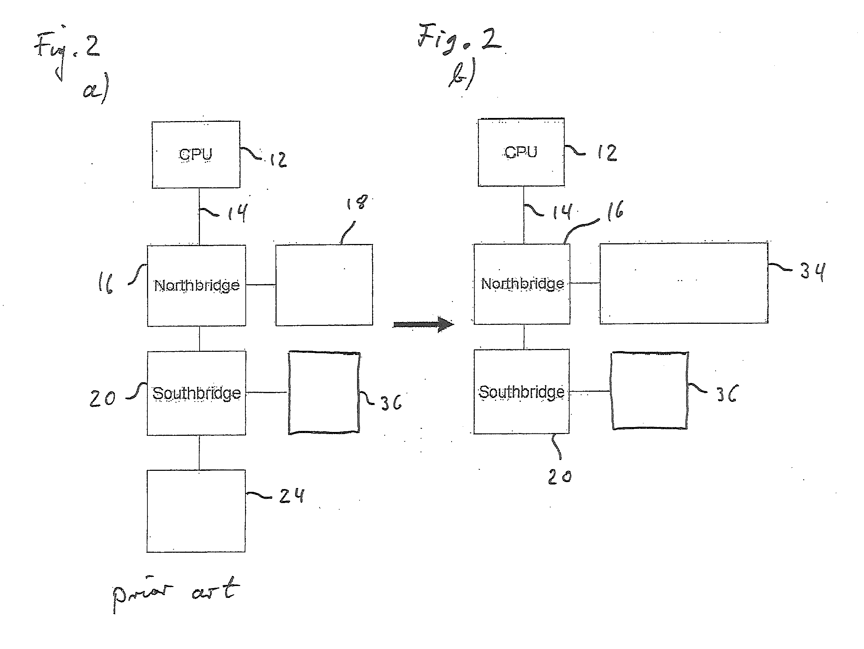

Fig. 2a shows a further schematic computer architecture known from prior art. In the computer system depicted here, the bus system is divided in a Northbridge 16 and a Southbridge 20. The CPU 12 is connected via a front side bus 14 to the Northbridge 16. Also the random access memory 18 is connected to the Northbridge 16. A data storage device 24, e.g. a hard disc drive and peripherals 36, e.g. a printer, network card, etc. are connected to the Southbridge 20.

In contrast, according to a further embodiment of the invention, the nonvolatile random access memory 34, serving as a random access memory as well as a data storage device is directly connected to the Northbridge 16 as it is shown in Fig. 2b. Therefore, a high speed data bus is available for communication between the CPU 12 and the nonvolatile random access memory 34. Further peripherals are connected to the Southbridge 20 as it is known from Fig. 2a.

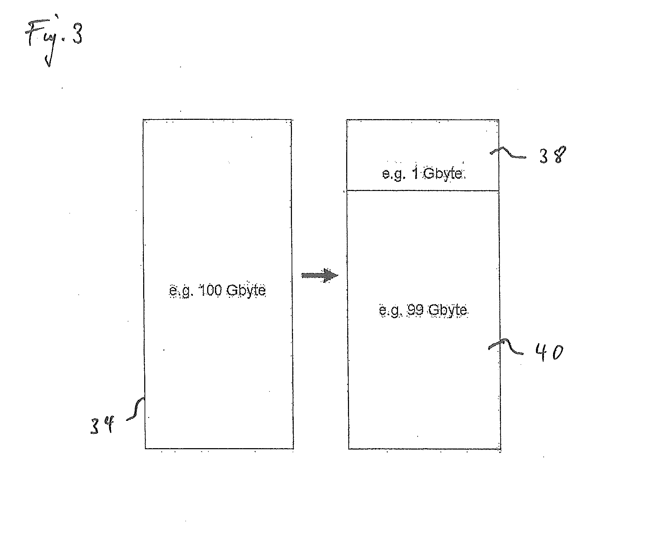

Fig. 3 shows a schematic sketch of an allocation of the nonvolatile random access memory 34. By way of an example only, the capacity of the non volatile random access memory 34 should be 100 GByte, as it is shown in the left part of Fig. 3. The storage space of the nonvolatile random access memory 34 is allocated into a first section 38 having a size of 1 GByte and a second section 40 having a size of 99 GByte as it is shown in the right part of Fig. 3. By way of a further example, the first and smaller section 38 is used for data processing while the second and larger section 40 is used for permanent storage of data, e.g. user data, data related to the operating system, etc. Dividing the unified storage memory into a part predetermined for data processing 38 and a part predetermined for storage 40 has the advantage that a file system structure can be used in the larger section 40 used for storage. This facilitates addressing of the larger section 40 of the memory. Copying data between the storage part 40 of the memory and the processing part 38 of the memory is performed fast because the copying process is realized within one memory 34. Therefore, also by structuring the memory in a storage part 40 and a processing part 38 the benefits of the combined device are realized. Preferably, the size of the first and second section 38, 40 is allocated dynamically. Preferably, the allocation between the first and second section 38, 40 depends on the actual workload of the computer system or the present use of the nonvolatile random access memory 34 in case said memory is located in a physically detachable entity.

The size of the first section 38 of the nonvolatile memory used for processing data may be enlarged in order to improve the performance of the system in case the computer is confronted with a high workload. In case the nonvolatile random access memory 34 is used as a personal workbench for a user working on a plurality of different computer systems, the performance of the system is not the main focus. Consequently, the size of the second section 40 of the nonvolatile random access memory 34 may be chosen as large as possible in order to provide a high storage capacity to the user.

## Claims

1. Apparatus (10) for data processing comprising a central processing unit (12) and a memory bus (14, 16, 20, 32) for attaching a non volatile random access memory, **characterized in that** data related to an operating system used for running said apparatus (10) is at least partly stored in said non volatile random access memory (34) and wherein memory used by the operating system for operating said apparatus (10) is at least partly said non volatile random access memory (34).

2. Apparatus (10) according to claim 1, wherein the only recordable memory comprised by said apparatus (10) is the non volatile random access memory (34).

3. Apparatus (10) according to claim 1 or 2, wherein the non volatile random access memory (34) is located in a component (42) of the apparatus (10) that is physically detachable from said apparatus (10).

4. Apparatus (10) according to one of claims 1 to 3, wherein the memory bus connection (14, 16, 20, 32) is realized by a direct wire (50) or plug (46) connection of pins (44) between the central processing unit (12) and the non volatile random access memory (34).

5. Apparatus (10) according to claim 4, wherein the memory bus (14, 16, 20, 32) is a PCI-Express connection.

6. Apparatus (10) according to one of the preceding claims, wherein the non volatile random access memory (34) is divided into different virtual sections (38, 40).

7. Apparatus (10) according to claim 6, wherein at least one virtual section (40) is used for data storage and a further virtual section (38) is used as a primary memory for processing data.

8. Apparatus (10) according to claim 6 or 7, wherein a size of the virtual sections (38, 40) is dynamically allocatable.

9. Apparatus (10) according to one of the preceding claims, wherein the non volatile random access memory (38) is one of a phase change random access memory, a magnetic random access memory, a ferroelectric random access memory and a NanotubeRAM device.

10. Apparatus (10) according to one of the preceding claims, wherein said apparatus (10) is one of a personal computer, a microprocessor, an embedded platform, a set-top box and a media recorder.
